(19) Europäisches Patentamt / European Patent Office / Office européen des brevets

(11) **EP 4 535 114 B1**

(12) **EUROPEAN PATENT SPECIFICATION**

(45) Date of publication and mention
of the grant of the patent:
**29.04.2026 Bulletin 2026/18**

(21) Application number: **23834783.5**

(22) Date of filing: **30.06.2023**

(51) International Patent Classification (IPC):
*G05D 1/246* (2024.01)   *G05D 1/242* (2024.01)
*G05D 1/243* (2024.01)   *G05D 1/622* (2024.01)
*A01D 34/00* (2006.01)

(52) Cooperative Patent Classification (CPC):
**A01D 34/008; G05D 1/242; G05D 1/243;
G05D 1/246; G05D 1/622;** G01C 21/3837;
G05D 2101/20; G05D 2105/15; G05D 2107/23;
G05D 2109/10; G05D 2111/10; G05D 2111/17

(86) International application number:
**PCT/CN2023/105187**

(87) International publication number:
**WO 2024/008016 (11.01.2024 Gazette 2024/02)**

(54) **OPERATION MAP CONSTRUCTION METHOD AND APPARATUS, MOWING ROBOT, AND STORAGE MEDIUM**

VERFAHREN UND VORRICHTUNG ZUR KONSTRUKTION EINER BETRIEBSKARTE, MÄHROBOTER UND SPEICHERMEDIUM

PROCÉDÉ ET APPAREIL DE CONSTRUCTION DE CARTE D'INTERVENTION, ROBOT DE TONTE ET SUPPORT DE STOCKAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.07.2022 CN 202210806394**

(43) Date of publication of application:
**09.04.2025 Bulletin 2025/15**

(73) Proprietor: **Shenzhen Mammotion Innovation Co.,
Limited
Shenzhen, Guangdong 518000 (CN)**

(72) Inventors:
• **WANG, Ning**
**Shenzhen, Guangdong 518000 (CN)**
• **DU, Pengju**
**Shenzhen, Guangdong 518000 (CN)**
• **HUANG, Zhenhao**
**Shenzhen, Guangdong 518000 (CN)**

(74) Representative: **Huang, Liwei
Cäcilienstraße 12
40597 Düsseldorf (DE)**

(56) References cited:
CN-A- 106 097 444     CN-A- 106 447 697
CN-A- 110 390 237     CN-A- 113 079 801
CN-A- 113 079 801     CN-A- 115 235 485
KR-A- 20210 115 493   KR-A- 20210 115 493
US-A1- 2017 344 020   US-A1- 2019 387 185
US-A1- 2021 019 536

## Description

### Technical Field

The present invention relates to the field of computer technologies, and in particular, to an operational map construction method and apparatus, a computer program, a robotic lawn mower, and a storage medium.

### Background Art

Robotic lawn mowers are widely used for maintenance of home courtyard lawns and trimming of large grass areas. A robotic lawn mower integrates technologies such as motion control, multi-sensor fusion, route planning, etc. In order to control the robotic lawn mower to implement a mowing operation, a mowing route needs to be planned for the robotic lawn mower, so that the robotic lawn mower can completely cover all operation areas.

When the robotic lawn mower mows a lawn in a new environment, a staff member needs to detect the site in real time and transmit data to the robotic lawn mower, so as to create an electronic map for the robotic lawn mower to use. For different lawns, measurement and input need to be performed again, i.e., the current operational map construction is inefficient.

US2019/387185A1 disclosed a thermal sensor or imager, such as a thermal imaging camera can be added to a vehicle navigation system. After objects have been detected by a lidar, camera or any other set of sensors, the system queries the thermal camera about a particular object. The thermal sensor of the camera is used as another source of information to determine if the object has been correctly classified or not. The compute and data demands on a thermal imaging camera system can be limited by restricting the queries to only those objects having particular classifications and by restricting the queries to programmable regions of interest corresponding to the positions of the selected objects.

### Summary

Embodiments of the present invention provide an operational map construction method and apparatus, a robotic lawn mower, and a storage medium, which can improve the operational map construction efficiency.

The invention is set out in the appended set of claims.

In the embodiments of the present invention, after the laser point cloud data in the environment corresponding to the target map is acquired, the candidate obstacles are determined in the target map based on the laser point cloud data; then, the feature images of the candidate obstacles are obtained and the target obstacle is determined from the candidate obstacles based on the feature images; and finally, the operation area and the non-operation area are delineated in the target map based on the target obstacle. In the mowing solution provided in the present invention, the candidate obstacles are determined in the target map based on the laser point cloud data; then, the target obstacle is determined based on the feature images of the candidate obstacles; and finally, the operation area and the non-operation area are delineated in the target map based on the target obstacle. That is, through the combination of an image vision technology and a laser point cloud technology, the problem of delineation omission or error caused by manual delineation of the operation area and the non-operation area can be avoided, thereby improving the operational map construction efficiency.

### Brief Description of the Drawings

In order to more clearly describe the technical solutions in the embodiments of the present invention, the accompanying drawings required for describing the embodiments will be briefly described below.

FIG. 1a is a schematic diagram of a scene of an operational map construction method according to an embodiment of the present invention;

FIG. 1b is a schematic flowchart of an operational map construction method according to an embodiment of the present invention;

FIG. 2a is a schematic diagram of a structure of an operational map construction apparatus according to an embodiment of the present invention;

FIG. 2b is a schematic diagram of another structure of an operational map construction apparatus according to an embodiment of the present invention; and

FIG. 3 is a schematic diagram of a structure of an electronic device according to an embodiment of the present invention.

### Detailed Description of Embodiments

The technical solutions in the embodiments of the present invention will be described clearly and completely below with reference to the accompanying drawings in the embodiments of the present invention. Apparently, the described embodiments are merely some rather than all of the embodiments of the present invention.

It should be noted that when an element is referred to as being "fixed to" or "disposed" on another element, it may be directly on or indirectly on another element. When an element is referred to as being "connected" to another element, it may be directly or indirectly connected to another element. In addition, the connection may have the function of fixing or circuit connection.

It should be understood that orientations or positional relationships indicated by the terms "length", "width", "upper", "lower", "front", "rear", "left", "right", "vertical", "horizontal", "top", "bottom", "inner", "outer", etc. are orientations or positional relationships shown in the accompanying drawings, and are merely for facilitating the description of the embodiments of the present invention and simplifying the description, rather than indicating or implying that a specified apparatus or element must have a specific orientation or be constructed and operated in a specific orientation, and therefore should not be construed as limiting the present invention.

In addition, the terms "first" and "second" are merely used for the purpose of illustration, and cannot be construed as indicating or implying relative importance or implicitly indicating the number of technical features indicated. Thus, the features defined with "first" and "second" may explicitly or implicitly include one or more features. In the description of the embodiments of the present invention, "a plurality of" means two or more, unless specifically defined otherwise.

The embodiments of the present invention provide an operational map construction method and apparatus, a robotic lawn mower, and a storage medium.

The operational map construction apparatus may be specifically integrated in a microcontroller unit (MCU) of a robotic lawn mower, or may be integrated in an intelligent terminal or a server. The MCU, also referred to as a single-chip microcomputer, is a chip-level computer formed through appropriate reduction of a frequency and specifications of a central processing unit (CPU), and interfacing of peripherals such as a memory, a timer, a USB, an analog-to-digital converter/a digital-to-analog converter, a UART, a PLC, and a DMA, to provide different combined control for different application scenarios. The robotic lawn mower may move automatically, prevent collisions, and automatically return within a range for charging, is provided with safety detection and battery level detection, has a certain climbing ability, and therefore is particularly suitable for lawn trimming and maintenance in places such as home courtyards, public green space, etc. The robotic lawn mower has the characteristics of automatic mowing, grass clipping cleanup, automatic rain avoidance, automatic charging, automatic obstacle avoidance, compact size, electronic virtual fencing, network control, etc.

The terminal may be a smartphone, a tablet computer, a laptop, a desktop computer, a smart speaker, a smart watch, etc., but is not limited thereto. The terminal and the server may be connected directly or indirectly by means of wired or wireless communication, and the server may be a separate physical server, a server cluster or distributed system including a plurality of physical servers, or a cloud server which provides cloud services, cloud databases, cloud computing, cloud functions, cloud storage, network services, cloud communication, middleware services, domain name services, security services, CDNs, and basic cloud computing services such as big data and artificial intelligence platforms, which is not limited in the present invention.

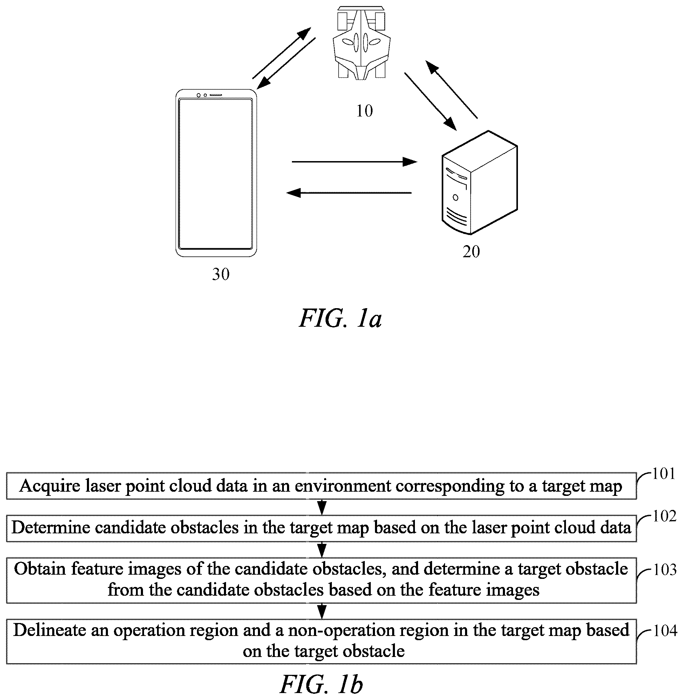

For example, referring to FIG. 1a, the present invention provides a mowing system, including a robotic lawn mower 10, a server 20, and user equipment 30 which are in communication connections with one another. The robotic lawn mower 10 is provided with a lidar, and may acquire laser point cloud data in an environment corresponding to a target map through the lidar. Then, the robotic lawn mower 10 may determine candidate obstacles in the target map based on the laser point cloud data, where the target map may be an environmental map or an electronic map. Next, a camera in the robotic lawn mower 10 obtains feature images of the candidate obstacles, and a target obstacle is determined from the candidate obstacles based on the feature images. Finally, the robotic lawn mower 10 delineates an operation area and a non-operation area in the target map based on the target obstacle. After delineating the operation area and the non-operation area, the robotic lawn mower 10 may synchronize data of the operation area and data of the non-operation area to the server 20 and the user equipment 30, to facilitate subsequent monitoring of a mowing operation of the robotic lawn mower 10. In the mowing solution provided in the present invention, the candidate obstacles are determined in the target map based on the laser point cloud data; then, the target obstacle is determined based on the feature images of the candidate obstacles; and finally, the operation area and the non-operation area are delineated in the target map based on the target obstacle. That is, through the combination of an image vision technology and a laser point cloud technology, the problem of delineation omission or error caused by manual delineation of the operation area and the non-operation area can be avoided. In addition, due to the unified scanning of an operation environment by the lidar, positions of all obstacles can be determined at one time without the need to delineate the obstacles one by one, thereby avoiding the problems of a low overall delineation speed and low map construction efficiency caused by the large volume of obstacles. In this way, this solution improves the operational map construction efficiency.

Detailed descriptions are provided below. It should be note that the order of description of the following embodiments does not constitute a limitation on the order of precedence for the embodiments.

An operational map construction method includes: acquiring laser point cloud data in an environment corresponding to a target map; determining candidate obstacles in the target map based on the laser point cloud data; obtaining feature images of the candidate obstacles and determining a target obstacle from the candidate obstacles based on the feature images; and delineating an operation area and a non-operation area in the target map based on the target obstacle.

Referring to FIG. 1b, FIG. 1b is a schematic flowchart of an operational map construction method according to an embodiment of the present invention. A specific process of the operational map construction method may be as follows:

101: Acquire laser point cloud data in an environment corresponding to a target map.

The target map is a mowing map corresponding to a robotic lawn mower, the robotic lawn mower may perform a mowing operation in an area corresponding to the target map, and subsequently may delineate an operation area and a non-operation area in the target map. The target map does not include buildings such as houses where the operation cannot be performed.

For example, specifically, the body of the robotic lawn mower may be provided with a three-dimensional lidar. The three-dimensional lidar is a measuring instrument that instantaneously measures three-dimensional spatial coordinate values according to a laser ranging principle (including a pulse laser and a phase laser). A three-dimensional visualization model of a complex and irregular scene may be quickly established based on spatial point cloud data obtained by using a three-dimensional laser scanning technology.

In actual application, the three-dimensional lidar obtains pose information and three-dimensional point clouds corresponding to acquisition points based on a simultaneous localization and mapping (SLAM) method. The three-dimensional lidar may be a handheld, backpack-mounted, or vehicle-mounted mobile data acquisition device for mobile scanning.

For example, a point cloud coordinate system is constructed using an acquisition point of initial collection of the three-dimensional lidar as a coordinate origin, where the initial acquisition here is the acquisition of a first frame of three-dimensional point cloud corresponding to a three-dimensional point cloud map by the three-dimensional lidar. The acquisition point may be a location of the center of gravity of the three-dimensional lidar, or a fixed reference point on the device, provided that requirements for establishing the coordinate system and defining the coordinate origin are met. In an example, in the point cloud coordinate system, the Z axis is in a vertical scanning plane, with the upward direction being positive, the X and Y axes are both in a transverse scanning plane, and the three axes are perpendicular to each other to form a left-handed coordinate system. During mobile scanning, a real-time pose of the three-dimensional lidar and a three-dimensional point cloud at that time may be obtained in real time based on the SLAM method.

102: Determine candidate obstacles in the target map based on the laser point cloud data.

Reflection intensity is an important property of a laser sensor, which may reflect properties of substances in an environment. Therefore, the reflection intensity may be used to determine candidate obstacles in the target map. That is, optionally, in some embodiments, the step of "determining candidate obstacles in the target map based on the laser point cloud data" may specifically include:

(11) obtaining a map coordinate system of the target map;
(12) extracting a reflection value and three-dimensional coordinates corresponding to each three-dimensional laser point from the laser point cloud data; and
(13) determining the candidate obstacles in the target map based on the map coordinates, and the reflection values and the three-dimensional coordinates corresponding to the three-dimensional laser points.

For example, a corresponding pixel value may be rendered in the target map based on the reflection value corresponding to each three-dimensional laser point. For example, a three-dimensional laser point with a reflection value of a corresponds to a pixel value of 10, and a three-dimensional laser point with a reflection value of b corresponds to a pixel value of 45, which may be specifically set based on an actual situation and will not be repeated herein.

The map coordinate system of the target map is a two-dimensional coordinate system, while the coordinates of the three-dimensional laser point further include height information, and a point cloud coordinate system corresponding to the laser point cloud data needs to be further obtained, to facilitate subsequent determining of the candidate obstacles in the target map. That is, optionally, in some embodiments, the step of "determining the candidate obstacles in the target map based on the map coordinates, and the reflection values and the three-dimensional coordinates corresponding to the three-dimensional laser points" may specifically include:

(21) determining a point cloud coordinate system corresponding to the laser point cloud data;
(22) rendering the reflection value corresponding to the three-dimensional laser point to the target map based on the three-dimensional coordinates corresponding to the three-dimensional laser point and a transformation relationship between the map coordinate system and the point cloud coordinate system; and
(23) determining the candidate obstacles in the target map based on pixel values in a rendered target map.

For example, specifically, the three-dimensional coordinates corresponding to the three-dimensional laser point may be transformed into map coordinates in the target map based on the transformation relationship between the map coordinate system and the point cloud coordinate system. Then, the reflection value corresponding to the three-dimensional laser point is rendered to the target map based on the map coordinates obtained through transformation. Finally, the candidate obstacles are determined in the target map based on the pixel values in the rendered target map.

Optionally, in some embodiments, the step of "rendering the reflection value corresponding to the three-dimensional laser point to the target map based on the three-dimensional coordinates corresponding to the three-dimensional laser point and a transformation relationship between the map coordinate system and the point cloud coordinate system" may specifically include:

(41) transforming the three-dimensional coordinates corresponding to the three-dimensional laser point based on the transformation relationship between the map coordinate system and the point cloud coordinate system, to obtain map coordinates of the three-dimensional laser point in the target map; and
(42) rendering the reflection value corresponding to the three-dimensional laser point to the target map based on the map coordinates of the three-dimensional laser point in the target map.

The three-dimensional coordinates corresponding to the three-dimensional laser point may be transformed according to a preset formula, where the preset formula represents a transformation relationship between a three-dimensional coordinate system and a two-dimensional coordinate system, i.e., the transformation relationship between the point cloud coordinate system and the map coordinate system. It should be noted that, in the image processing field, coordinate system transformation is performed to transform a three-dimensional spatial world coordinate system into a two-dimensional pixel coordinate system for image processing. Commonly used coordinate systems include a world coordinate system, a camera coordinate system, and an image coordinate system. The world coordinate system (xw, yw, zw), also referred to as a measurement coordinate system, is a three-dimensional rectangular coordinate system, based on which spatial positions of a camera and an object to be detected may be described. The camera coordinate system (xc, yc, zc) is also a three-dimensional rectangular coordinate system. The origin is at an optical center of a lens, the xc and yc axes are respectively parallel to two sides of an image plane, and the zc axis is an optical axis of the lens, which is perpendicular to the image plane. The image coordinate system (x, y) is a two-dimensional rectangular coordinate system on the image plane. The origin of the image coordinate system is an intersection point (also referred to as a principal point) of the optical axis of the lens and the image plane. The x axis of the image coordinate system is parallel to the xc axis of the camera coordinate system. The y axis of the image coordinate system is parallel to the yc axis of the camera coordinate system.

Specifically, a coordinate transformation relationship may be determined based on extrinsic parameters between a lidar device and an image acquisition device (i.e., a target map acquisition device) and intrinsic parameters of the image acquisition device. The extrinsic parameters are parameters of the image acquisition device in the world coordinate system, such as a position and a direction of rotation of the image acquisition device. The intrinsic parameters are parameters related to properties of the image acquisition device, such as a focal length and a pixel size of the image acquisition device.

For example, three-dimensional point cloud coordinates pij may be transformed into two-dimensional map coordinates p'i'j' in the following manner:

$$X' = (x/z) * fx + cx$$

$$Y' = (y/z) * fy + cy$$

where fx and fy are focal lengths of the image acquisition device, cx and cy are principal points of the image acquisition device, and two-dimensional map coordinates corresponding to the three-dimensional point cloud coordinates pij (x, y, z) are p'i'j' (x', y').

103: Obtain feature images of the candidate obstacles and determining a target obstacle from the candidate obstacles based on the feature images.

It should be noted that the candidate obstacles are determined based on the laser point cloud data, that is, the obstacles are determined based on the reflection of a lidar signal. However, the robotic lawn mower is generally used for outdoor operation. If there are other partially light-transmitting substances between a scanner and an object to be detected, such as rain, snow and dust, which are common in outdoor environments, part of laser energy is reflected back early, and as long as a trigger threshold is reached, the partially light-transmitting substances may be considered as detected objects, leading to a measurement error. Therefore, the candidate obstacles determined based on the laser point cloud data may not be real obstacles. Therefore, in the present invention, the obstacles are positioned and identified by combining a vision technology and a point cloud technology.

For example, specifically, images of the candidate obstacles may be acquired and feature extraction may be performed on the acquired images, to obtain feature images of the candidate obstacles. Specifically, a convolutional neural network (CNN) may be used to perform feature extraction on the acquired images. Further, the convolutional neural network may be used to determine the target obstacle from the candidate obstacles. That is, optionally, in some embodiments, the step of "determining a target obstacle from the candidate obstacles based on the feature images" may specifically include:

(51) inputting the feature images into a preset image classification network, to obtain classification labels of the candidate obstacles; and
(52) determining a candidate obstacle whose classification label is a target label as the target obstacle.

The image classification network may be obtained through pre-training, and may specifically include the following.

Convolutional layer: mainly for performing feature extraction on an input image (such as a training sample or an image needing to be recognized), where a size of a convolution kernel and the number of convolution kernels may depend on the actual application, for example, sizes of convolution kernels of first to fourth convolutional layers may be (7, 7), (5, 5), (3, 3), and (3, 3) in sequence. Optionally, in order to reduce the calculation complexity and improve the calculation efficiency, in this embodiment, the sizes of the convolution kernels of the four convolutional layers may all be set to (3, 3), an activation function is a "rectified linear unit (relu)", and a padding (padding is a space between an element border and element content, which is defined by properties) manner is set to "same". The "same" padding manner may be simply understood as padding an edge with zeros, and the number of zeros for padding on the left (top) is the same as or one less than the number of zeros for padding on the right (bottom). Optionally, the convolutional layers may be directly connected, thereby increasing a network convergence speed. In order to further reduce a calculation amount, a downsampling (pooling) operation may be performed on all or any one to two layers of the second to fourth convolutional layers. The downsampling operation is basically the same as a convolution operation, except that a convolution kernel for downsampling takes only the maximum value (max pooling) or average value (average pooling), etc. of the corresponding position. For ease of description, in the embodiments of the present invention, an example in which the downsampling operation is performed at both the second and third convolutional layers, and the downsampling operation is specifically max pooling is used for description.

It should be noted that, for ease of description, in the embodiments of the present invention, both a layer at which the activation function resides and a downsampling layer (also referred to as a pooling layer) are classified as convolutional layers. It should be understood that the structure may also be considered to include a convolutional layer, a layer at which the activation function resides, a downsampling layer (i.e., a pooling layer), and a fully connected layer. Certainly, the structure may further include an input layer for inputting data and an output layer for outputting data, which will not be repeated herein.

Fully connected layer: learned features may be mapped to a sample label space. The fully connected layer functions mainly as a "classifier" in the entire convolutional neural network. Each node of the fully connected layer is connected to all nodes of the output of a previous layer (such as the downsampling layer in the convolutional layers). One node of the fully connected layer is referred to as one neuron in the fully connected layer, and the number of neurons in the fully connected layer may depend on requirements in the actual application. For example, in a text detection model, the number of neurons in the fully connected layer may be set to 512 or 128, and so on. Similar to the convolutional layer, optionally, in the fully connected layer, a nonlinear factor may also be added by adding an activation function, for example, adding an activation function sigmoid (an S-type function).

Specifically, the image classification network may be used to recognize the feature images, to obtain a probability that the candidate obstacle belongs to each type of obstacle, and a corresponding classification label is output based on the probability. Finally, a candidate obstacle whose classification label is a target label is determined as the target obstacle. For example, a candidate obstacle whose classification label is a flower bed is determined as the target obstacle.

104: Delineate an operation area and a non-operation area in the target map based on the target obstacle.

Specifically, contour information of the target obstacle is obtained, and the operation area and the non-operation area are delineated in the target map. A curve surrounding the target obstacle is output. After the non-operation area is determined, the operation area is delineated in the target map based on a preset operation boundary and the non-operation area. That is, the step of "delineating an operation area and a non-operation area in the target map based on the target obstacle" includes:

(61) obtaining at least contour information of the target obstacle below a preset height;
(62) outputting, based on the contour information and a location of the target obstacle in the target map, an isolation curve surrounding the target obstacle; and
(63) determining an area enclosed by the isolation curve as the non-operation area and an area other than the non-operation area as the operation area.

Optionally, the preset height may be set to be slightly higher than a height of the robotic lawn mower. For example, if the height of the robotic lawn mower is 30 centimeters, the preset height may be set to 35 centimeters, to ensure that the robotic lawn mower will not be blocked by the obstacles and stop the mowing operation when performing the mowing operation.

It should be noted that when there are a plurality of target obstacles in the target map, distances between adjacent target obstacles may be calculated, and the target obstacles with distances therebetween less than a threshold may be grouped into the same non-operation area, where the threshold may be set based on a size of the robotic lawn mower. This can avoid the problem that the robotic lawn mower fails to operate due to the excessively small delineated operation area, and prevent this type of operation area from affecting the subsequent process of the mowing operation, thereby improving the subsequent mowing efficiency.

Further, in some embodiments, the operation area and the non-operation area may be distinguished by different colors. That is, optionally, after the step of "delineating an operation area and a non-operation area in the target map based on the target obstacle", the method may specifically further include:

highlighting the operation area using a first color and highlighting the non-operation area using a second color.

For example, specifically, the first color may be yellow and the second color may be red, which may be specifically selected based on an actual situation and will not be repeated herein.

In the embodiments of the present invention, after the laser point cloud data in the environment corresponding to the target map is acquired, the candidate obstacles are determined in the target map based on the laser point cloud data; then, the feature images of the candidate obstacles are obtained, and the target obstacle is determined from the candidate obstacles based on the feature images; and finally, the operation area and the non-operation area are delineated in the target map based on the target obstacle. In the mowing solution provided in the present invention, the candidate obstacles are determined in the target map based on the laser point cloud data; then, the target obstacle is determined based on the feature images of the candidate obstacles; and finally, the operation area and the non-operation area are delineated in the target map based on the target obstacle. That is, through the combination of an image vision technology and a laser point cloud technology, the problem of delineation omission or error caused by manual delineation of the operation area and the non-operation area can be avoided. In addition, due to the unified scanning of an operation environment by the lidar, positions of all obstacles can be determined at one time without the need to delineate the obstacles one by one, thereby avoiding the problems of a low overall delineation speed and low map construction efficiency caused by the large volume of obstacles. In this way, this solution improves the operational map construction efficiency.

Referring to FIG. 2a, FIG. 2a is a schematic diagram of a structure of an operational map construction apparatus according to an embodiment of the present invention. The operational map construction apparatus may include an acquisition module 201, a first determining module 202, an obtaining module 203, a second determining module 204, and a delineation module 205, which may be specifically as follows.

The acquisition module 201 is configured to acquire laser point cloud data in an environment corresponding to a target map.

For example, specifically, the acquisition module 201 may quickly establish a three-dimensional visualization model of a complex and irregular scene based on spatial point cloud data obtained by using a three-dimensional laser scanning technology.

The first determining module 202 is configured to determine candidate obstacles in the target map based on the laser point cloud data.

Optionally, in some embodiments, the first determining module 202 may specifically include:

an obtaining unit configured to obtain a map coordinate system of the target map;
an extraction unit configured to extract a reflection value and three-dimensional coordinates corresponding to each three-dimensional laser point from the laser point cloud data; and
a determining unit configured to determine the candidate obstacles in the target map based on the map coordinates, and the reflection values and the three-dimensional coordinates corresponding to the three-dimensional laser points.

Optionally, in some embodiments, the determining unit may specifically include:

a first determining subunit configured to determine a point cloud coordinate system corresponding to the laser point cloud data;
a rendering subunit configured to render the reflection value corresponding to the three-dimensional laser point to the target map based on the three-dimensional coordinates corresponding to the three-dimensional laser point and a transformation relationship between the map coordinate system and the point cloud coordinate system; and
a second determining subunit configured to determine the candidate obstacles in the target map based on pixel values in a rendered target map.

Optionally, in some embodiments, the rendering subunit may be specifically configured to: transform the three-dimensional coordinates corresponding to the three-dimensional laser point based on the transformation relationship between the map coordinate system and the point cloud coordinate system, to obtain map coordinates of the three-dimensional laser point in the target map; and render the reflection value corresponding to the three-dimensional laser point to the target map based on the map coordinates of the three-dimensional laser point in the target map.

The obtaining module 203 is configured to obtain feature images of the candidate obstacles.

The second determining module 204 is configured to determine a target obstacle from the candidate obstacles based on the feature images.

The second determining module 204 may specifically use a convolutional neural network to determine the target obstacle from the candidate obstacles. Optionally, in some embodiments, the second determining module 204 may be specifically configured to: input the feature images into a preset image classification network, to obtain classification labels of the candidate obstacles; and determine a candidate obstacle whose classification label is a target label as the target obstacle.

The delineation module 205 is configured to delineate an operation area and a non-operation area in the target map based on the target obstacle.

Tthe delineation module 205 obtains contour information of the target obstacle, and delineates the operation area and the non-operation area in the target map. That is, the delineation module 205 is configured to: obtain at least the contour information of the target obstacle in the target map; output, based on the contour information and a location of the target obstacle in the target map, an isolation curve surrounding the target obstacle; and determine an area enclosed by the isolation curve as the non-operation area and an area other than the non-operation area as the operation area.

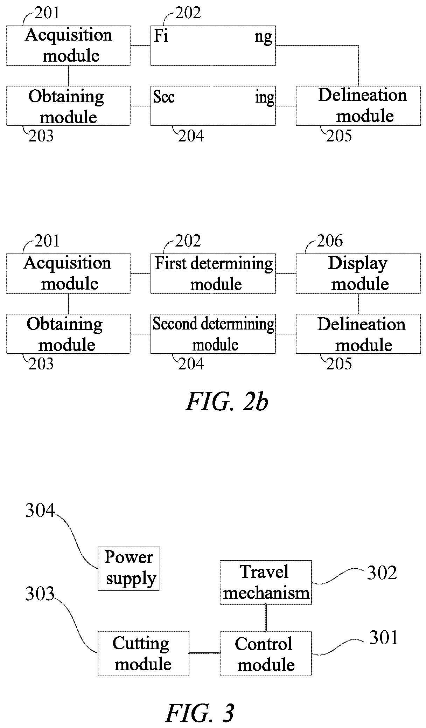

Optionally, in some embodiments, referring to FIG. 2b, the operational map construction apparatus of the present invention may specifically further include a display module 206. The display module 206 may be specifically configured to: highlight the operation area using a first color and highlight the non-operation area using a second color.

In the embodiments of the present invention, after the acquisition module 201 acquires the laser point cloud data in the environment corresponding to the target map, the first determining module 202 determines the candidate obstacles in the target map based on the laser point cloud data; then, the obtaining module 203 obtains the feature images of the candidate obstacles, and the second determining module 204 determines the target obstacle from the candidate obstacles based on the feature images; and finally, the delineation module 205 delineates the operation area and the non-operation area in the target map based on the target obstacle. In the mowing solution provided in the present invention, the candidate obstacles are determined in the target map based on the laser point cloud data; then, the target obstacle is determined based on the feature images of the candidate obstacles; and finally, the operation area and the non-operation area are delineated in the target map based on the target obstacle. That is, through the combination of an image vision technology and a laser point cloud technology, the problem of delineation omission or error caused by manual delineation of the operation area and the non-operation area can be avoided, thereby improving the operational map construction efficiency.

In addition, an embodiment of the present invention further provides a robotic lawn mower. As shown in FIG. 3, a schematic diagram of a structure of the robotic lawn mower according to the embodiment of the present invention is shown. Specifically,
the robotic lawn mower may include components such as a control module 301, a travel mechanism 302, a cutting module 303, and a power supply 304. Those skilled in the art may understand that the structure of the electronic device shown in FIG. 3 does not impose a limitation on the electronic device, and may include more or fewer components than those shown, a combination of some components, or a different arrangement of components.

The control module 301 is a control center of the robotic lawn mower. The control module 301 may specifically include components such as a central processing unit (CPU), a memory, an input/output port, a system bus, a timer/counter, a digital-to-analog converter, and an analog-to-digital converter. The CPU performs various functions of the robotic lawn mower and processes data by running or executing software programs and/or modules stored in the memory and invoking the data stored in the memory. Preferably, the CPU can integrate an application processor and a modem processor, where the application processor mainly processes operating systems and applications, etc., and the modem processor mainly processes wireless communication. It may be understood that the above mentioned modem processor may not be integrated into the CPU.

The memory may be used to store software programs and modules, and the CPU executes various functional applications and processes data by running the software programs and modules stored in the memory. The memory may mainly include a program storage area and a data storage area, where the program storage area can store an operating system, an application required by at least one function (such as a sound play function and an image play function), etc., and the data storage area can store data created during the use of the electronic device, etc. In addition, the memory may include a high-speed random access memory, and may also include a non-volatile memory, such as at least one disk storage device and a flash memory device, or other volatile solid-state storage devices. Accordingly, the memory may further include a memory controller to provide an access by the CPU to the memory.

The travel mechanism 302 is electrically connected to the control module 301 for adjusting a travel speed and direction of the robotic lawn mower in response to control signals transmitted by the control module 301, to implement a self-moving function of the robotic lawn mower.

The cutting module 303 is electrically connected to the control module 301 and is configured to adjust a height and rotation speed of a cutter disc in response to the control signals transmitted by the control module, to implement a mowing operation.

The power supply 304 may be logically connected to the control module 301 by means of a power management system, so as to implement functions such as charging management, discharging management, and power consumption management by means of the power management system. The power supply 304 may further include any of one or more DC or AC power supplies, a recharging system, a power failure detection circuit, a power converter or an inverter, a power status indicator, etc.

Although not shown, the robotic lawn mower may further include a communication module, a sensor module, a prompt module, etc., which will not be repeated herein.

The communication module is configured to transmit and receive signals during transmitting and receiving information, and to enable signal transmitting and receiving between user equipment and a base station or a server by means of establishing a communication connection with the user equipment, the base station or the server.

The sensor module is configured to acquire internal or external environmental information, and to feed the acquired environmental data back to the control module for making a decision, thereby achieving the functions of precise positioning and intelligent obstacle avoidance of the robotic lawn mower. Optionally, the sensor may include: an ultrasonic sensor, an infrared sensor, a collision sensor, a rain sensor, a lidar sensor, an inertial measurement unit, a tachometer, an image sensor, a position sensor and other sensors, which are not limited.

The prompt module is configured to indicate a current operating status of the robotic lawn mower to a user. In this solution, the prompt module includes, but is not limited to, an indicator light, a buzzer, and the like. For example, the robotic lawn mower can indicate to the user a current power status, an operating status of an electric motor, an operating status of the sensor, etc. by means of the indicator light. For another example, if a malfunction or theft of the robotic lawn mower is detected, an alert can be provided by the buzzer.

Specifically, in this embodiment, the processor in the control module 301 may load executable files corresponding to the processes of one or more applications into the memory according to the following instructions, and the processor runs the applications stored in the memory, to implement various functions as follows: acquiring laser point cloud data in an environment corresponding to a target map; determining candidate obstacles in the target map based on the laser point cloud data; obtaining feature images of the candidate obstacles and determining a target obstacle from the candidate obstacles based on the feature images; and delineating an operation area and a non-operation area in the target map based on the target obstacle.

For the specific implementation of the above operations, refer to the foregoing embodiments, which will not be repeated herein.

In the embodiments of the present invention, after the laser point cloud data in the environment corresponding to the target map is acquired, the candidate obstacles are determined in the target map based on the laser point cloud data; then, the feature images of the candidate obstacles are obtained, and the target obstacle is determined from the candidate obstacles based on the feature images; and finally, the operation area and the non-operation area are delineated in the target map based on the target obstacle. In the mowing solution provided in the present invention, the candidate obstacles are determined in the target map based on the laser point cloud data; then, the target obstacle is determined based on the feature images of the candidate obstacles;

and finally, the operation area and the non-operation area are delineated in the target map based on the target obstacle. That is, through the combination of an image vision technology and a laser point cloud technology, the problem of delineation omission or error caused by manual delineation of the operation area and the non-operation area can be avoided, thereby improving the operational map construction efficiency. In addition, due to the unified scanning of an operation environment by a lidar, positions of all obstacles can be determined at one time without the need to delineate the obstacles one by one, thereby avoiding the problems of a low overall delineation speed and low map construction efficiency caused by the large volume of obstacles.

Those of ordinary skill in the art may understand that all or some of the steps of the methods in the above embodiments may be implemented by the instructions, or be completed by controlling related hardware by means of the instructions, where the instructions may be stored in a computer-readable storage medium and loaded and executed by the processor.

Therefore, an embodiment of the present invention provides a storage medium storing a plurality of instructions which can be loaded by a processor to perform the steps of any of the operational map construction methods provided in the embodiments of the present invention. For example, the instructions may cause the following steps to be performed: acquiring laser point cloud data in an environment corresponding to a target map; determining candidate obstacles in the target map based on the laser point cloud data; obtaining feature images of the candidate obstacles and determining a target obstacle from the candidate obstacles based on the feature images; and delineating an operation area and a non-operation area in the target map based on the target obstacle.

For the specific implementation of the above operations, refer to the foregoing embodiments, which will not be repeated herein.

The storage medium may include: a read-only memory (ROM), a random access memory (RAM), a magnetic disk or an optical disc, and the like.

Due to the instructions stored in the storage medium, the steps of any of the operational map construction methods provided in the embodiments of the present invention may be performed, and the beneficial effects that can be achieved by any of the operational map construction methods provided in the embodiments of the present invention can thus be achieved. For details, refer to the foregoing embodiments, which will not be repeated herein.

The operational map construction method and apparatus, the robotic lawn mower, and the storage medium provided in the embodiments of the present invention are described in detail above.

**Claims**

1. An operational map construction method, comprising:

   acquiring laser point cloud data in an environment corresponding to a target map (S101);
   determining candidate obstacles in the target map based on the laser point cloud data (S102);
   obtaining feature images of the candidate obstacles, and determining a target obstacle from the candidate obstacles based on the feature images (S103); and
   delineating an operation area and a non-operation area in the target map based on the target obstacle (104);
   **characterized in that**
   the delineating the operation area and the non-operation area in the target map based on the target obstacle comprises:

   obtaining at least contour information of the target obstacle below a preset height;
   outputting, based on the contour information and a location of the target obstacle in the target map, an isolation curve surrounding the target obstacle; and
   determining an area enclosed by the isolation curve as the non-operation area and an area outside the non-operation area as the operation area.

2. The method according to claim 1, wherein the determining candidate obstacles in the target map based on the laser point cloud data comprises:

   obtaining a map coordinate system of the target map;
   extracting a reflection value and three-dimensional coordinates corresponding to each three-dimensional laser point from the laser point cloud data; and
   determining the candidate obstacles in the target map, based on the map coordinates, and the reflection values and the three-dimensional coordinates corresponding to the three-dimensional laser points.

3. The method according to claim 2, wherein the determining the candidate obstacles in the target map based on the map coordinates, and the reflection values and the three-dimensional coordinates corresponding to the three-dimensional laser points comprises:

   determining a point cloud coordinate system corresponding to the laser point cloud data;
   rendering the reflection value corresponding to the three-dimensional laser point to the target map, based on the three-dimensional coordinates corresponding to the three-dimensional laser point, and a transformation relationship between the map coordinate system and the point cloud coordinate system; and
   determining the candidate obstacles in the target map based on pixel values in a rendered target map.

4. The method according to claim 3, wherein the rendering the reflection value corresponding to the three-dimensional laser point to the target map, based on the three-dimensional coordinates corresponding to the three-dimensional laser point, and a transformation relationship between the map coordinate system and the point cloud coordinate system, comprises:

   transforming the three-dimensional coordinates corresponding to the three-dimensional laser point, based on the transformation relationship between the map coordinate system and the point cloud coordinate system, to obtain map coordinates of the three-dimensional laser point in the target map; and
   rendering the reflection value corresponding to the three-dimensional laser point to the target map based on the map coordinates of the three-dimensional laser point in the target map.

5. The method according to any one of claims 1 to 4, wherein the determining a target obstacle from the candidate obstacles based on the feature images comprises:

   inputting the feature images into a preset image classification network, to obtain classification labels of the candidate obstacles; and
   determining a candidate obstacle whose classification label is a target label as the target obstacle.

6. The method according to claim 1, wherein after the delineating an operation area and a non-operation area in the target map based on the target obstacle, the method further comprises:

   highlighting the operation area by using a first color; and
   highlighting the non-operation area by using a second color.

7. An operational map construction apparatus, configured to perform the method of any of claims 1 to 6, comprising:

   an acquisition module (201) configured to acquire laser point cloud data in an environment corresponding to a target map;

a first determining module (202) configured to determine candidate obstacles in the target map based on the laser point cloud data;

an obtaining module (203) configured to obtain feature images of the candidate obstacles;

a second determining module (204) configured to determine a target obstacle from the candidate obstacles based on the feature images; and

a delineation module configured to delineate an operation area and a non-operation area in the target map based on the target obstacle.

8. Computer program, when executed by a processor, implements the steps of the operational map construction method according to any one of claims 1 to 6.

9. A robotic lawn mower, comprising a memory, a processor, and a computer program of claim 8, which is stored in the memory and executable on the processor.

10. A storage medium storing a computer program of claim 8.

**Patentansprüche**

1. Verfahren zur Konstruktion einer Betriebskarte, umfassend:

Erfassen von Laserpunktwolkendaten in einer Umgebung, die einer Zielkarte entspricht (S101);

Bestimmen von Kandidatenhindernissen in der Zielkarte basierend auf den Laserpunktwolkendaten (S102);

Erhalten von Merkmalsbildern der Kandidatenhindernisse und Bestimmen eines Zielhindernisses aus den Kandidatenhindernissen basierend auf den Merkmalsbildern (S103); und

Abgrenzen eines Betriebsbereichs und eines Nichtbetriebsbereichs in der Zielkarte basierend auf dem Zielhindernis (104);

**dadurch gekennzeichnet, dass**

das Abgrenzen des Betriebsbereichs und des Nichtbetriebsbereichs in der Zielkarte basierend auf dem Zielhindernis Folgendes umfasst:

Erhalten von zumindest Konturinformationen des Zielhindernisses unterhalb einer voreingestellten Höhe;

Ausgeben, basierend auf den Konturinformationen und einer Position des Zielhindernisses in der Zielkarte, einer Isolationskurve, die das Zielhindernis umgibt; und

Bestimmen eines Bereichs, der von der Isolationskurve eingeschlossen ist, als den Nichtbetriebsbereich und eines Bereichs außerhalb des Nichtbetriebsbereichs als den Betriebsbereich.

2. Verfahren nach Anspruch 1, wobei das Bestimmen von Kandidatenhindernissen in der Zielkarte basierend auf den Laserpunktwolkendaten Folgendes umfasst:

Erhalten eines Kartenkoordinatensystems der Zielkarte;

Extrahieren eines Reflexionswerts und dreidimensionaler Koordinaten, die jedem dreidimensionalen Laserpunkt entsprechen, aus den Laserpunktwolkendaten; und

Bestimmen der Kandidatenhindernisse in der Zielkarte, basierend auf den Kartenkoordinaten und den Reflexionswerten und den dreidimensionalen Koordinaten, die den dreidimensionalen Laserpunkten entsprechen.

3. Verfahren nach Anspruch 2, wobei das Bestimmen der Kandidatenhindernisse in der Zielkarte basierend auf den Kartenkoordinaten und den Reflexionswerten und den dreidimensionalen Koordinaten, die den dreidimensionalen Laserpunkten entsprechen, Folgendes umfasst:

Bestimmen eines Punktwolkenkoordinatensystems, das den Laserpunktwolkendaten entspricht;

Rendern des Reflexionswerts, der dem dreidimensionalen Laserpunkt entspricht, auf die Zielkarte, basierend auf den dreidimensionalen Koordinaten, die dem dreidimensionalen Laserpunkt entsprechen, und einer Transformationsbeziehung zwischen dem Kartenkoordinatensystem und dem Punktwolkenkoordinatensystem; und

Bestimmen der Kandidatenhindernisse in der Zielkarte basierend auf Pixelwerten in einer gerenderten Zielkarte.

4. Verfahren nach Anspruch 3, wobei das Rendern des Reflexionswerts, der dem dreidimensionalen Laserpunkt entspricht, auf die Zielkarte, basierend auf den dreidimensionalen Koordinaten, die dem dreidimensionalen Laserpunkt entsprechen, und einer Transformationsbeziehung zwischen dem Kartenkoordinatensystem und dem Punktwolkenkoordinatensystem, Folgendes umfasst:

Transformieren der dreidimensionalen Koordinaten, die dem dreidimensionalen Laserpunkt entsprechen, basierend auf der Transformationsbeziehung zwischen dem Kartenkoordinatensystem und dem Punktwolkenkoordinatensystem, um Kartenkoordinaten des dreidimensionalen Laserpunkts in der Zielkarte zu erhalten; und

Rendern des Reflexionswerts, der dem dreidimensionalen Laserpunkt entspricht, auf die Zielkarte basierend auf den Kartenkoordinaten des dreidimensionalen Laserpunkts in der Zielkarte.

5. Verfahren nach einem der Ansprüche 1 bis 4, wobei das Bestimmen eines Zielhindernisses aus den Kandidatenhindernissen basierend auf den Merkmalsbildern Folgendes umfasst:

Eingeben der Merkmalsbilder in ein voreingestelltes Bildklassifizierungsnetzwerk, um Klassifizierungsetiketten der Kandidatenhindernisse zu erhalten; und
Bestimmen eines Kandidatenhindernisses, dessen Klassifizierungsetikett ein Zieletikett ist, als das Zielhindernis.

6. Verfahren nach Anspruch 1, wobei nach dem Abgrenzen eines Betriebsbereichs und eines Nichtbetriebsbereichs in der Zielkarte basierend auf dem Zielhindernis das Verfahren ferner Folgendes umfasst:

Hervorheben des Betriebsbereichs durch Verwenden einer ersten Farbe; und
Hervorheben des Nichtbetriebsbereichs durch Verwenden einer zweiten Farbe.

7. Vorrichtung zur Konstruktion einer Betriebskarte, die dazu konfiguriert ist, das Verfahren nach einem der Ansprüche 1 bis 6 durchzuführen, umfassend:

ein Erfassungsmodul (201), das dazu konfiguriert ist, Laserpunktwolkendaten in einer Umgebung zu erfassen, die einer Zielkarte entspricht;
ein erstes Bestimmungsmodul (202), das dazu konfiguriert ist, Kandidatenhindernisse in der Zielkarte basierend auf den Laserpunktwolkendaten zu bestimmen;
ein Erhaltungsmodul (203), das dazu konfiguriert ist, Merkmalsbilder der Kandidatenhindernisse zu erhalten;
ein zweites Bestimmungsmodul (204), das dazu konfiguriert ist, ein Zielhindernis aus den Kandidatenhindernissen basierend auf den Merkmalsbildern zu bestimmen; und
ein Abgrenzungsmodul, das dazu konfiguriert ist, einen Betriebsbereich und einen Nichtbetriebsbereich in der Zielkarte basierend auf dem Zielhindernis abzugrenzen.

8. Computerprogramm, das, wenn es durch einen Prozessor ausgeführt wird, die Schritte des Verfahrens zur Konstruktion einer Betriebskarte nach einem der Ansprüche 1 bis 6 implementiert.

9. Mähroboter, umfassend einen Speicher, einen Prozessor und ein Computerprogramm nach Anspruch 8, das in dem Speicher gespeichert und auf dem Prozessor ausführbar ist.

10. Speichermedium, das ein Computerprogramm nach Anspruch 8 speichert.

**Revendications**

1. Procédé de construction de carte d'intervention, comprenant :

l'acquisition de données de nuages de points laser dans un environnement correspondant à une carte cible (S101) ;
la détermination d'obstacles candidats dans la carte cible sur la base des données de nuage de points laser (S102) ;
l'obtention d'images de caractéristiques des obstacles candidats, et la détermination d'un obstacle cible à partir des obstacles candidats sur la base des images de caractéristiques (S103) ; et
la délimitation d'une zone d'intervention et d'une zone de non-intervention dans la carte cible sur la base de l'obstacle cible (104) ;
**caractérisé en ce que**
la délimitation de la zone d'intervention et de la zone de non-intervention dans la carte cible sur la base de l'obstacle cible comprend :

l'obtention d'au moins des informations de contour de l'obstacle cible en dessous d'une hauteur prédéfinie ;
la sortie, sur la base des informations de contour et d'une emplacement de l'obstacle cible dans la carte cible, d'une courbe d'isolement entourant l'obstacle cible ; et
la détermination d'une zone entourée par la courbe d'isolement en tant que zone de non-intervention et d'une zone en dehors de la zone de non-intervention en tant que zone d'intervention.

2. Procédé selon la revendication 1, ladite détermination d'obstacles candidats dans la carte cible sur la base des données de nuage de points laser comprenant :

l'obtention d'un système de coordonnées cartographiques de la carte cible ;
l'extraction d'une valeur de réflexion et de coordonnées tridimensionnelles correspondant à chaque point laser tridimensionnel à partir des données de nuage de points laser ; et

la détermination des obstacles candidats dans la carte cible, sur la base des coordonnées de la carte, et des valeurs de réflexion et des coordonnées tridimensionnelles correspondant aux points laser tridimensionnels.

**3.** Procédé selon la revendication 2, ladite détermination des obstacles candidats dans la carte cible sur la base des coordonnées de carte, et lesdites valeurs de réflexion et lesdites coordonnées tridimensionnelles correspondant aux points laser tridimensionnels comprenant :

la détermination d'un système de coordonnées de nuage de points correspondant aux données de nuage de points laser ;

le rendu de la valeur de réflexion correspondant au point laser tridimensionnel sur la carte cible, sur la base des coordonnées tridimensionnelles correspondant au point laser tridimensionnel, et d'une relation de transformation entre le système de coordonnées de carte et le système de coordonnées de nuage de points ; et

la détermination des obstacles candidats dans la carte cible sur la base de valeurs de pixels dans une carte cible rendue.

**4.** Procédé selon la revendication 3, ledit rendu de la valeur de réflexion correspondant au point laser tridimensionnel sur la carte cible, sur la base des coordonnées tridimensionnelles correspondant au point laser tridimensionnel, et d'une relation de transformation entre le système de coordonnées de carte et le système de coordonnées de nuage de points, comprenant :

la transformation des coordonnées tridimensionnelles correspondant au point laser tridimensionnel, sur la base de la relation de transformation entre le système de coordonnées de carte et le système de coordonnées de nuage de points, pour obtenir les coordonnées de carte du point laser tridimensionnel dans la carte cible ; et le rendu de la valeur de réflexion correspondant au point laser tridimensionnel sur la carte cible sur la base des coordonnées de la carte du point laser tridimensionnel dans la carte cible.

**5.** Procédé selon l'une quelconque des revendications 1 à 4, ladite détermination d'un obstacle cible à partir des obstacles candidats sur la base des images de caractéristiques comprenant :

l'entrée des images de caractéristiques dans un réseau de classification d'images prédéfini, pour obtenir des étiquettes de classification des obstacles candidats ; et

la détermination d'un obstacle candidat dont l'étiquette de classification est une étiquette cible en tant qu'obstacle cible.

**6.** Procédé selon la revendication 1, après la délimitation d'une zone d'intervention et d'une zone de non-intervention dans la carte cible sur la base de l'obstacle cible, ledit procédé comprenant en outre :

la mise en évidence de la zone d'intervention à l'aide d'une première couleur ; et

la mise en évidence de la zone de non-intervention à l'aide d'une seconde couleur.

**7.** Appareil de construction de carte d'intervention, configuré pour exécuter le procédé selon l'une quelconque des revendications 1 à 6, comprenant :

un module d'acquisition (201) configuré pour acquérir des données de nuages de points laser dans un environnement correspondant à une carte cible ;

un premier module de détermination (202) conçu pour déterminer des obstacles candidats dans la carte cible sur la base des données de nuage de points laser ;

un module d'obtention (203) configuré pour obtenir des images de caractéristiques des obstacles candidats ;

un second module de détermination (204) configuré pour déterminer un obstacle cible à partir des obstacles candidats sur la base des images de caractéristiques ; et

un module de délimitation configuré pour délimiter une zone d'intervention et une zone de non-intervention dans la carte cible sur la base de l'obstacle cible.

**8.** Programme informatique, lorsqu'il est exécuté par un processeur, mettant en œuvre les étapes du procédé de construction de carte d'intervention selon l'une quelconque des revendications 1 à 6.

**9.** Tondeuse à gazon robotisée, comprenant une mémoire, un processeur et un programme informatique selon la revendication 8, qui est stocké dans la mémoire et exécutable sur le processeur.

**10.** Support de stockage stockant un programme informatique selon la revendication 8.

10

30

20

*FIG. 1a*

| Acquire laser point cloud data in an environment corresponding to a target map |
| --- |

101

| Determine candidate obstacles in the target map based on the laser point cloud data |
| --- |

102

| Obtain feature images of the candidate obstacles, and determine a target obstacle from the candidate obstacles based on the feature images |
| --- |

103

| Delineate an operation region and a non-operation region in the target map based on the target obstacle |
| --- |

104

*FIG. 1b*

201

202

Acquisition module | Fi ng

Obtaining module | Sec ing | Delineation module

203

204

205

201

202

206

Acquisition module | First determining module | Display module

Obtaining module | Second determining module | Delineation module

203

204

205

*FIG. 2b*

304

Power supply

Travel mechanism — 302

303

Cutting module | Control module — 301

*FIG. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019387185 A1